# EUROPÄISCHE PATENTSCHRIFT

(11) **EP 2 458 719 B1**
(45) Veröffentlichungstag und Bekanntmachung des Hinweises auf die Patenterteilung: **10.06.2020**
(21) Anmeldenummer: 11009174.1
(22) Anmeldetag: 18.11.2011
(51) Int. Cl.: H02K 7/18, F03B 13/08, F03D 9/25

(54) **Energiewandler**
Energy converter
Convertisseur d'énergie

(30) Priorität: 04.12.2010 DE 102010053522
(43) Veröffentlichungstag der Anmeldung: 30.05.2012
(73) Patentinhaber: Krämer, Joachim, 34289 Zierenberg (DE)
(72) Erfinder: Krämer, Joachim, 34289 Zierenberg (DE)

(56) Entgegenhaltungen:
- EP-A1- 1 876 350
- EP-A1- 1 878 913
- WO-A1-2005/080790
- WO-A2-2008/081187
- DE-A1- 3 803 147
- JP-A- 2003 021 038
- JP-A- 2006 189 014
- US-A1- 2003 137 149
- US-A1- 2007 145 751
- US-A1- 2010 295 388

## Beschreibung

Die Erfindung betrifft einen Energiewandler zur Umwandlung von Strömungsenergie eines strömenden Mediums in elektrische Energie, ein Verfahren zu dessen Herstellung und eine Verwendung des Energiewandlers.

Aus der DE 3803147 A1 ist eine Strömungsmaschine für den Antrieb eines Stromgenerators bekannt, wobei ein Wasserrad der Strömungsmaschine durch Abwasser angetrieben wird, das durch eine Kläranlage fließt.

WO 2005/080790 A1 offenbart eine Energieerzeugungsanlage, die insbesondere für den Einsatz als Wasserkraftgenerator ausgelegt ist und eine Hydraulikturbine und einen Synchrongenerator umfasst.

WO 2008/081187 A2 offenbart eine elektrische Maschine, die angepasst ist, innerhalb eines Fluidstroms eingesetzt zu werden. Die Maschine umfasst einen Stator und einen Rotor. Der Rotor definiert eine Öffnung und weist eine Vielzahl von Rotorblättern auf, die von einem Umfangsbereich des Rotors in die Öffnung hineinragen, wobei der Rotor derart drehbar an dem Stator angebracht werden kann, dass eine Bewegung von Fluid durch die Öffnung eine Drehung des Rotors relativ zu dem Stator bewirkt.

Der Erfindung liegt die Aufgabe zu Grunde, einen Energiewandler anzugeben, der sich insbesondere zur Gewinnung elektrischer Energie aus Strömungsenergie von Abwasser eignet. Ferner liegt der Erfindung die Aufgabe zu Grunde, ein Verfahren zur Herstellung eines derartigen Energiewandlers anzugeben.

Die Aufgabe wird erfindungsgemäß hinsichtlich des Energiewandlers durch die in Anspruch 1 angegebenen Merkmale und hinsichtlich des Verfahrens zu dessen Herstellung durch die in Anspruch 5 angegebenen Merkmale gelöst.

Vorteilhafte Ausgestaltungen der Erfindung sind Gegenstand der Unteransprüche.

Ein erfindungsgemäßer Energiewandler dient der Umwandlung von Strömungsenergie eines strömenden Mediums in elektrische Energie. Der Energiewandler umfasst eine Turbine zur Umwandlung von Strömungsenergie des Mediums in Rotationsenergie der Turbine und einen elektrischen Generator zur Umwandlung von Rotationsenergie der Turbine in elektrische Energie. Die Turbine weist eine Turbinenwelle, eine drehbar gelagerte Turbinenwellennabe und mehrere mit jeweils einem ersten Ende an der Turbinenwellennabe befestigte Turbinenschaufeln auf. Der Generator weist einen im Wesentlichen ringförmigen Stator mit wenigstens einer in eine erste Vergussmasse eingegossenen elektrischen Spule und einen durch mehrere an der Turbine befestigte Permanentmagneten gebildeten Rotor auf. Die Turbinenwelle ist entlang einer Symmetrieachse des Stators angeordnet. Die Turbinenschaufeln erstrecken sich jeweils von der Turbinenwellennabe zu dem Stator hin.

Der Rotor des Generators ist somit direkt an den Turbinenschaufeln der Turbine angeordnet. Die Turbine selbst ist von dem ringförmigen Stator des Generators umgeben. Dadurch weist der Energiewandler eine sehr kompakte Bauweise in Form eines Rades auf und kann vorteilhaft beispielsweise in Abwasserkanalschächten angeordnet werden, um die Strömungsenergie von Abwasser in elektrische Energie umzuwandeln.

Die Vergussmasse, in die die elektrischen Spulen des Stators eingegossen sind, schützt die Spulen dabei vorteilhaft vor Korrosion oder einem Kurzschluss, indem sie verhindert, dass die Spulen mit dem strömenden Medium, im Falle der Anordnung des Energiewandlers in einem Abwasserkanal also mit dem Abwasser, in Kontakt kommen.

Der Stator des Generators weist wenigstens einen Metallkern auf, der wenigstens teilweise von Wicklungen der wenigstens einen elektrischen Spule umwickelt ist und ebenfalls in die erste Vergussmasse eingegossenen ist.

Durch den Metallkern oder die Metallkerne werden die in den Spulen des Generators induzierten Induktionsströme und damit der Wirkungsgrad des Energiewandlers vorteilhaft erhöht. Das Eingießen der Metallkerne in Vergussmasse verhindert einen Kontakt der Metallkerne mit dem strömenden Medium und schützt den Metallkern somit vorteilhaft vor Korrosion.

Die erste Vergussmasse ist dabei vorzugsweise Epoxidharz. Durch die Verwendung von Epoxidharz als Vergussmasse erhält der Stator des Generators vorteilhaft eine hohe Festigkeit und chemische Beständigkeit.

Die Permanentmagneten sind in einem im Wesentlichen ringförmigen Turbinenmantel angeordnet, der an dem Stator zugewandten zweiten Enden der Turbinenschaufeln befestigt ist. Dabei sind die Permanentmagneten in eine zweite Vergussmasse eingegossen, die ebenfalls vorzugsweise Epoxidharz ist.

Auf diese Weise erhält der Rotor eine zweckmäßige, dem Stator angepasste Form und auch die Permanentmagneten werden vorteilhaft durch Vergussmasse vor einem Kontakt mit dem strömenden Medium geschützt.

In einer bevorzugten Ausführung des Energiewandlers weist der Stator ferner drei elektrische Spulen für die Erzeugung dreiphasigen elektrischen Stromes auf. Dadurch kann der von dem Energiewandler erzeugte elektrische Strom vorteilhaft den Eigenschaften öffentlicher Strom- und Spannungsnetze angepasst und einfach in diese eingespeist werden.

Bei dem erfindungsgemäßen Verfahren zur Herstellung eines erfindungsgemäßen Energiewandlers werden die Wicklungen aller elektrischen Spulen des Stators sowie die Metallkerne des Stators in einem Vakuumvergussverfahren in die erste Vergussmasse eingegossen. Entsprechend werden auch die Permanentmagneten in einem Vakuumvergussverfahren in die zweite Vergussmasse eingegossen. Die Verwendung des Vakuumvergussverfahren ermöglicht vorteilhaft eine hohe Vergussqualität unter Vermeidung von Lufteinschlüssen in die Vergussmasse.

Wie oben bereits ausgeführt wurde eignet sich der erfindungsgemäße Energiewandler insbesondere zur Umwandlung von Strömungsenergie von Abwasser in elektrische Energie. Für diese erfindungsgemäße Verwendung wird der Energiewandler derart angeordnet, dass Turbinenschaufeln der Turbine durch die Strömung des Abwassers in Rotation versetzt werden. Auf diese Weise kann mittels des Energiewandlers vorteilhaft Abwasser zur Energiegewinnung genutzt werden.

Dazu wird der Energiewandler vorzugsweise in einem Abwasserkanalschacht, durch den Abwasser strömt, angeordnet. Dadurch kann der Energiewandler in einfacher Weise mit dem Abwasser in Kontakt gebracht und erforderlichenfalls, beispielsweise bei einem Defekt, wieder entnommen oder ausgetauscht werden.

Weitere Vorteile, Merkmale und Einzelheiten der Erfindung werden im Folgenden anhand von Ausführungsbeispielen unter Bezugnahme auf Zeichnungen beschrieben.

Darin zeigen:
Figur 1 eine Schnittdarstellung eines erfindungsgemäßen Energiewandlers in einer Ebene, die senkrecht auf einer Langsachse der Turbinenwelle steht,
Figur 2 eine Schnittdarstellung des in Fig. 1 dargestellten Energiewandlers in einer Ebene, die eine Längsachse der Turbinenwelle enthält,
Figur 3 eine Schnittdarstellung des Stators des in Fig. 1 dargestellten Energiewandlers in einer Ebene, die senkrecht auf einer Längsachse der Turbinenwelle steht,
Figur 4 eine Schnittdarstellung des Stators des in Fig. 1 dargestellten Energiewandlers in einer Ebene, die eine Längsachse der Turbinenwelle des Energiewandlers enthält,
Figur 5 eine Schnittdarstellung der Turbine und des Rotors des in Fig. 1 dargestellten Energiewandlers in einer Ebene, die senkrecht auf einer Längsachse der Turbinenwelle steht, und
Figur 6 eine Schnittdarstellung der Turbine und des Rotors des in Fig. 1 dargestellten Energiewandlers in einer Ebene, die eine Langsachse der Turbinenwelle des Energiewandlers enthält.

Einander entsprechende Teile sind in allen Figuren mit den gleichen Bezugszeichen versehen.

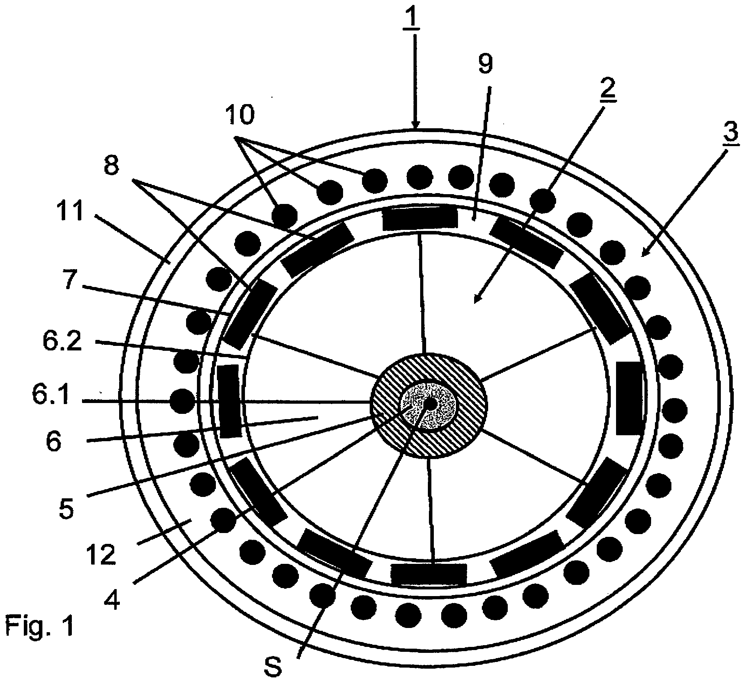

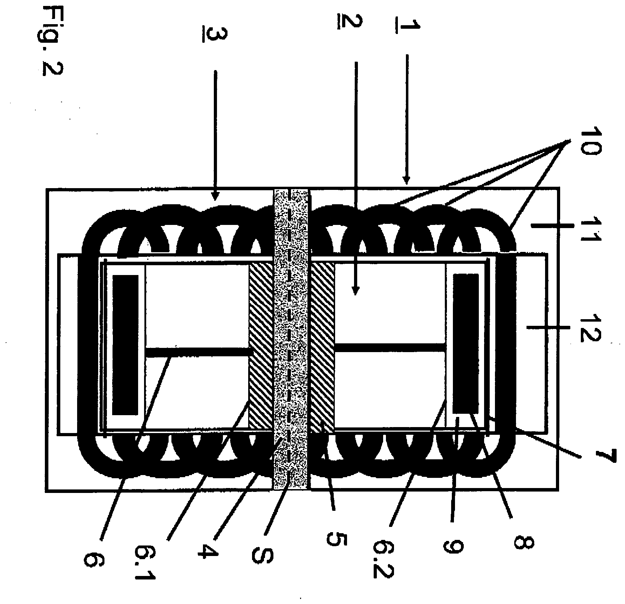

Die Figuren 1 und 2 zeigen jeweils Schnittdarstellungen eines erfindungsgemäßen Energiewandlers 1 . Der Energiewandler 1 umfasst eine Turbine 2 und einen Generator mit einem ringförmigen Stator 3 und einen aus mehreren Permanentmagneten 8 gebildeten Rotor. Fig. 1 zeigt einen Schnitt durch den Energiewandler 1 in einer Ebene, die senkrecht auf einer Symmetrieachse S des Stators 3 steht. Fig. 2 zeigt einen Schnitt durch den Energiewandler 1 in einer Ebene, die die Symmetrieachse S des Stators 3 enthält.

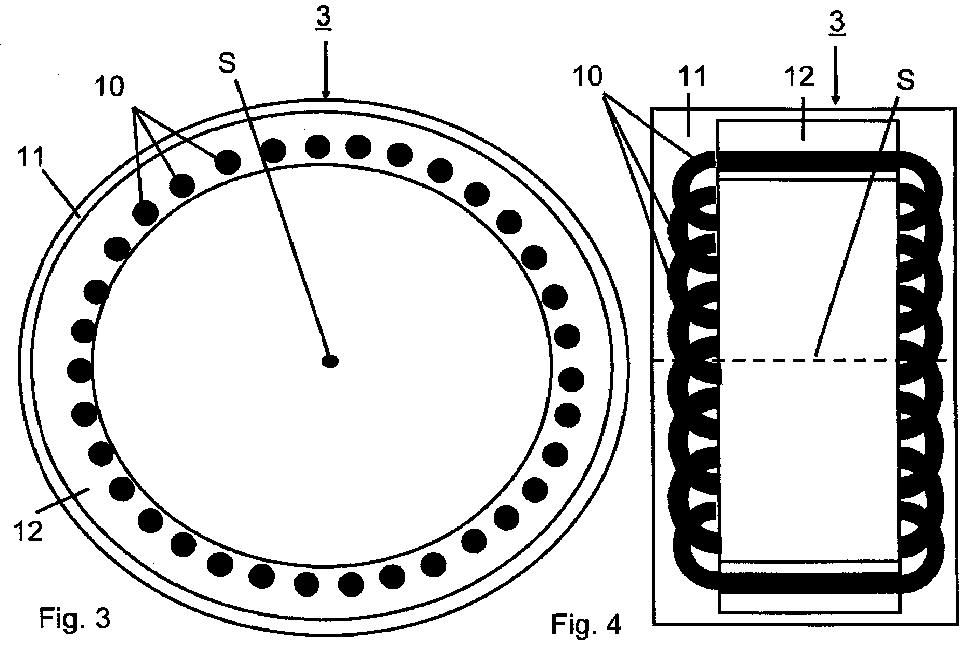

Die Figuren 3 und 4 zeigen den Stator des in Fig. 1 dargestellten Energiewandlers 1 in zwei jeweils den Figuren 1 und 2 entsprechenden Schnittdarstellungen.

Der Stator 3 umfasst einen Metallkern 12 und wenigstens eine elektrische Spule mit Wicklungen 10 , die um den Metallkern 12 gewickelt sind. Der Metallkern 12 besteht vorzugsweise aus ferromagnetischem Metall, beispielsweise aus Eisen. Die Anzahl und Anordnung der elektrischen Spulen kann der vorgesehenen Anwendung des Energiewandlers 1 angepasst werden. Eine besonders bevorzugte Ausführungsform sieht drei Spulen vor, deren Wicklungen 10 entlang des Stators 3 abwechselnd um den Metallkern 12 gelegt sind, so dass jede dritte in den Figuren 1 und 3 dargestellte Wicklung zu derselben Spule gehört und drei aufeinander folgende in diesen Figuren dargestellte Wicklungen 10 zu jeweils verschiedenen Spulen gehören. Dadurch kann vorteilhaft in einfacher Weise mittels des Energiewandlers 1 dreiphasiger Wechselstrom erzeugt werden. Alternativ können beispielsweise auch drei Spulen in unterschiedlichen Abschnitten des Stators 3 angeordnet werden.

In einer bevorzugten Ausführungsform ist dabei der Metallkern 12 mit (nicht dargestellten) Nuten versehen, in denen jeweils eine oder mehrere der Wicklungen 10 verlaufen. Dadurch wird vorteilhaft die Position der Wicklungen 10 am Metallkern 12 definiert.

Der Metallkern 12 und die Wicklungen 10 aller Spulen sind vollständig in eine erste Vergussmasse 11 , beispielsweise in Epoxidharz, eingegossen. Die erste Vergussmasse 11 bildet somit auch die Außenoberfläche des Stators 3 und schützt die Wicklungen 10 und den Metallkern 12 vorteilhaft vor Korrosion. Aus der Vergussmasse 11 sind Anschlüsse der Spulen herausgeführt, die jedoch nicht dargestellt sind.

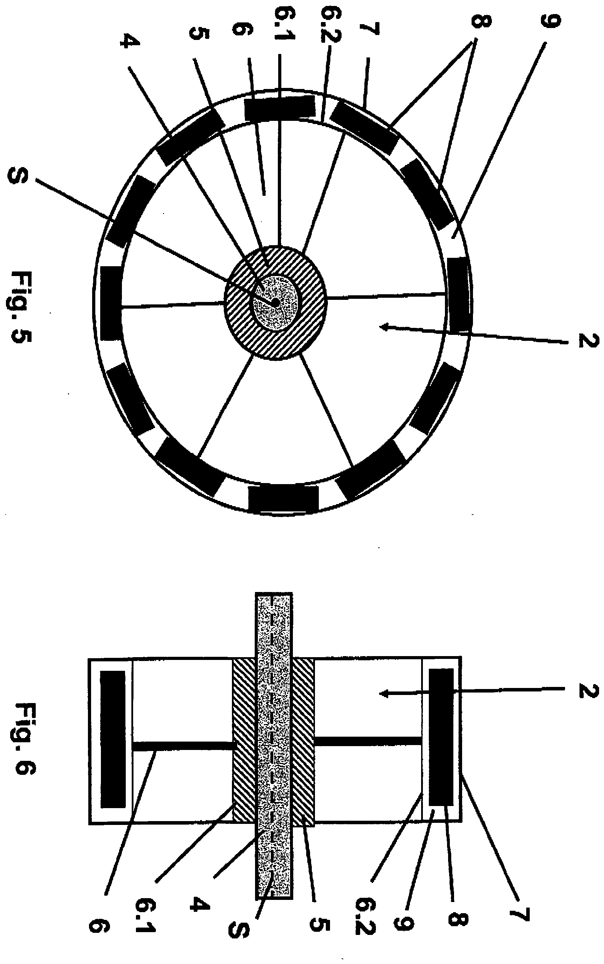

Die Figuren 5 und 6 zeigen die Turbine 2 und den Rotor des in Fig. 1 dargestellten Energiewandlers 1 in zwei jeweils den Figuren 1 und 2 entsprechenden Schnittdarstellungen.

Die Turbine 2 weist eine Turbinenwelle 4 , eine drehbar gelagerte Turbinenwellennabe 5 und mehrere Turbinenschaufeln 6 auf. Die Turbinenwelle 4 ist entlang der Symmetrieachse S des Stators 3 angeordnet. Jede Turbinenschaufel 6 ist mit einem ersten Ende 6.1 an der Turbinenwellennabe 5 stoff-, kraft- und/oder formschlüssig befestigt. Die Turbinenschaufeln 6 erstrecken sich jeweils von der Turbinenwellennabe 5 zu dem Stator 3 hin und sind vorzugsweise aus Edelstahl gefertigt.

An zweiten Enden 6.2 der Turbinenschaufeln 6 ist ein ringförmiger Turbinenmantel 7 stoff-, kraft- und/oder formschlüssig befestigt. Der Turbinenmantel 7 besteht aus einer zweiten Vergussmasse 9, in die die Permanentmagneten 8 vollständig eingegossen sind. Dabei ist die zweite Vergussmasse 9 vorzugsweise, aber nicht notwendig, mit der ersten Vergussmasse 11 identisch. Der Außendurchmesser des Turbinenmantels 7 ist kleiner als der Innendurchmesser des Stators 3 , so dass die Turbine 2 gegenüber dem Stator 3 rotieren kann.

Erfindungsgemäß werden die Wicklungen 10 aller Spulen und der Metallkern 12 des Stators 3 mittels eines Vakuumvergussverfahrens in die erste Vergussmasse 11 eingegossen. Entsprechend werden auch die Permanentmagneten 8 mittels des Vakuumvergussverfahrens in die zweite Vergussmasse 9 eingegossen.

Der Energiewandler 1 wird erfindungsgemäß zur Gewinnung elektrischer Energie aus der Strömungsenergie von Abwasser verwendet. Dazu wird er in einem Abwasserkanalschacht derart angeordnet, dass die Turbinenschaufeln 6 durch die Strömung des Abwassers in Rotation versetzt werden. Der Stator 3 und die Turbinenwelle 4 des Energiewandlers 1 werden dabei mittels geeigneter Halterungen an den Wänden des Abwasserkanalschachts befestigt.

### Bezugszeichenliste

- 1: Energiewandler
- 2: Turbine
- 3: Stator
- 4: Turbinenwelle
- 5: Turbinenwellennabe
- 6: Turbinenschaufel
- 6.1: erstes Ende
- 6.2: zweites Ende
- 7: Turbinenmantel
- 8: Permanentmagnet
- 9: zweite Vergussmasse
- 10: Wicklung
- 11: erste Vergussmasse
- 12: Metallkern
- S: Symmetrieachse

## Patentansprüche

1. Energiewandler (1) zur Umwandlung von Strömungsenergie eines strömenden Mediums in elektrische Energie, umfassend
eine Turbine (2) mit einer Turbinenwelle (4), einer drehbar gelagerten Turbinenwellennabe (5) und mehreren mit jeweils einem ersten Ende (6.1) an der Turbinenwellennabe (5) befestigten Turbinenschaufeln (6) zur Umwandlung von Strömungsenergie des Mediums in Rotationsenergie der Turbine (2)
und einen elektrischen Generator zur Umwandlung von Rotationsenergie der Turbine (2) in elektrische Energie, wobei der Generator einen im Wesentlichen ringförmigen Stator (3), der einen Metallkem (12) und wenigstens eine elektrische Spule mit Wicklungen (10), die um den Metallkern (12) gewickelt sind, umfasst,
und einen durch mehrere an der Turbine (2) befestigte Permanentmagneten (8) gebildeten Rotor aufweist,
die Turbinenwelle (4) entlang einer Symmetrieachse des Stators (3) angeordnet ist
und sich die Turbinenschaufeln (6) jeweils von der Turbinenwellennabe (5) zu dem Stator (3) hin erstrecken,
**dadurch gekennzeichnet, dass**
der Metallkern (12) und die Wicklungen (10) aller Spulen vollständig in eine erste Vergussmasse (11), die auch die Außenoberfläche des Stators (3) bildet, eingegossen sind und
die Permanentmagneten (8) in einem im Wesentlichen ringförmigen Turbinenmantel (7), der an dem Stator (3) zugewandten zweiten Enden (6.2) der Turbinenschaufeln (6) befestigt ist, angeordnet sind,
wobei der Turbinenmantel (7) aus einer zweiten Vergussmasse (9) besteht, in die die Permanentmagneten (8) vollständig eingegossen sind.

2. Energiewandler (1) nach Anspruch 1,
**dadurch gekennzeichnet, dass** die erste Vergussmasse (11) Epoxidharz ist.

3. Energiewandler (1) nach Anspruch 1 oder 2,
**dadurch gekennzeichnet, dass** die zweite Vergussmasse (9) Epoxidharz ist.

4. Energiewandler (1) nach einem der vorhergehenden Ansprüche,
**dadurch gekennzeichnet, dass** der Stator (3) drei elektrische Spulen für die Erzeugung dreiphasigen elektrischen Stromes aufweist.

5. Verfahren zur Herstellung eines Energiewandlers (1) gemäß einem der vorhergehenden Ansprüche, wobei die Wicklungen (10) aller Spulen und der Metallkern (12) des Stators (3) mittels eines Vakuumvergussverfahrens in die erste Vergussmasse (11) und die Permanentmagneten (8) mittels des Vakuumvergussverfahrens in die zweite Vergussmasse (9) eingegossen werden.

6. Verwendung eines Energiewandlers (1) gemäß einem der Ansprüche 1 bis 4 zur Umwandlung von Strömungsenergie von Abwasser in elektrische Energie, wobei der Energiewandler (1) derart angeordnet wird, dass Turbinenschaufeln (6) der Turbine (2) durch die Strömung des Abwassers in Rotation versetzt werden.

7. Verwendung eines Energiewandlers (1) nach Anspruch 6, **dadurch gekennzeichnet, dass** der Energiewandler (1) in einem Abwasserkanalschacht, durch den Abwasser strömt, angeordnet wird.

## Claims

1. Energy converter (1) for converting flow energy of a streaming medium into electrical energy, comprising
a turbine (2) with a turbine shaft (4), a pivoted rotatably mounted turbine shaft center hub (5) and several of turbine blades (6), each with having a first end (6.1) fixed to the turbine shaft center hub (5), for converting the flow energy of the medium into rotational energy of rotation off the turbine (2)
and an electrical generator for converting rotational energy of rotation of the turbine (2) into electrical energy, in wherein
the generator has a substantially ring-shaped stator (3) which comprises a metal core (12) and at least one electrical coil with windings (10) which are wound around the metal core (12),
and has a rotor formed by several of permanent magnets (8) attached to the turbine (2),
the turbine shaft (4) is arranged along an axis of symmetry of the stator (3)
and the turbine blades (6) each extend from the turbine center shaft hub (5) to the stator (3), **characterized in that**
the metal core (12) and the windings (10) of all coils are completely casted into a first casting compound (11), which also forms the outer surface of the stator (3),
and the permanent magnets (8) are arranged in an essentially circular turbine casing (7) which is attached to the second ends (6.2) of the turbine blades (6) facing the stator (3),
in which the turbine casing (7) consists of a second casting compound (9) into which the permanent magnets (8) are completely casted.

2. Energy converter (1) according to claim 1, **characterized in that**, that the first casting compound (11) is epoxy resin.

3. Energy converter (1) according to claim 1 or 2, **characterized in that**, that the second casting compound (9) is epoxy resin.

4. Energy converter (1) according to one of the preceding claims, **characterized in that**, that the stator (3) has three electrical coils for generating three-phases electrical current.

5. The process for producing manufacturing an energy converter (1) according to one of the previous preceding claims, in wherein the windings (10) of all coils and the metal core (12) of the stator (3) are casted in by a vacuum potting casting process into the first casting compound (11) and the permanent magnets (8 ) are casted in by a the vacuum casting process into the second casting compound (9).

6. Use of an energy converter (1) according to one of claims 1 to 4 for converting flow energy from of wastewater into electrical energy, in which the energy converter (1) is arranged in such a way that turbine blades (6) of the turbine (2) are set in rotation by the flow of the wastewater.

7. Use of an energy converter (1) according to claim 6, **characterized in that**, that the energy converter (1) is arranged in a wastewater sewer shaft in through which wastewater flows.

## Revendications

1. Convertisseur d'énergie (1) pour la conversion de l'énergie d'écoulement d'un milieu affluant en énergie électrique, comprenant
une turbine (2) avec un arbre de turbine (4), un moyeu d'arbre de turbine à émerillon (5) et une pluralité d'aubes de turbine (6), chacune avec une première extrémité (6.1) fixée au moyeu d'arbre de turbine (5), pour la conversion l'énergie d'écoulement du milieu en énergie de rotation de la turbine (2)
et un générateur électrique pour la conversion de l'énergie de rotation de la turbine (2) en énergie électrique, dans lequel
le générateur comporte un stator essentiellement en forme d'anneau (3) qui contient un noyau métallique (12) et au moins une bobine électrique avec des enroulements (10) enroulés autour du noyau métallique (12),
et un rotor formé par une pluralité d'aimants permanents (8) fixés à la turbine (2),
l'arbre de turbine (4) est disposé le long d'un axe de symétrie du stator (3)
et les aubes de turbine (6) s'étendent chacune du moyeu d'arbre de turbine (5) au stator (3), **caractérisé en ce que**
le noyau métallique (12) et les enroulements (10) de toutes les bobines sont entièrement versés dans une première composé de moulage (11), qui forme pareillement la surface extérieure du stator (3), et
les aimants permanents (8) sont disposés dans un carter de turbine (7) essentiellement en forme d'anneau qui est fixé aux deuxièmes extrémités (6.2) des aubes de turbine (6) tournées vers le stator (3),
dans lequel le carter de turbine (7) est constitué d'un second composé de moulage (9) dans lequel les aimants permanents (8) sont entièrement versés.

2. Convertisseur d'énergie (1) selon la revendication 1, **caractérisé en ce que** le premier composé de moulage (11) est une résine époxy.

3. Convertisseur d'énergie (1) selon la revendication 1 ou 2, **caractérisé en ce que** le deuxième composé de moulage (9) est une résine époxy.

4. Convertisseur d'énergie (1) selon l'une quelconque des revendications précédentes, **caractérisé en ce que** le stator (3) comporte trois bobines électriques pour la génération du courant électrique triphasé.

5. Procédé de fabrication d'un convertisseur d'énergie (1) selon l'une quelconque des revendications précédentes, dans lequel les enroulements (10) de toutes les bobines et le noyau métallique (12) du stator (3) ont versé au moyen d'un procédé du moulage sous vide dans le premier composé de moulage (11) et les aimants permanents (8) ont versé au moyen d'un procédé du moulage sous vide sont coulés dans le deuxième composé de moulage (9).

6. Utilisation d'un convertisseur d'énergie (1) selon l'une quelconque des revendications 1 à 4 pour convertir l'énergie d'écoulement des eaux usées en énergie électrique, dans lequel le convertisseur d'énergie (1) est disposé à telle point que les aubes de turbine (6) de la turbine (2) sont mis par l'écoulement des eaux usées en rotation.

7. Utilisation d'un convertisseur d'énergie (1) selon la revendication 6, **caractérisée en ce que** le convertisseur d'énergie (1) est disposé dans un puits d'égout à travers lequel s'écoulent les eaux usées.
